(19) Europäisches Patentamt
European Patent Office
Office européen des brevets

(11) **EP 2 181 067 B1**

(12) **FASCICULE DE BREVET EUROPEEN**

(45) Date de publication et mention
de la délivrance du brevet:
**04.04.2018 Bulletin 2018/14**

(21) Numéro de dépôt: **08839195.8**

(22) Date de dépôt: **25.07.2008**

(51) Int Cl.:
*C01B 13/18* (2006.01)       *C01B 13/14* (2006.01)
*C01G 1/02* (2006.01)        *C01G 25/00* (2006.01)
*C01F 17/00* (2006.01)       *C01G 25/02* (2006.01)
*B22F 9/20* (2006.01)        *B22F 1/00* (2006.01)
*B82Y 30/00* (2011.01)

(86) Numéro de dépôt international:
**PCT/FR2008/001120**

(87) Numéro de publication internationale:
**WO 2009/050344 (23.04.2009 Gazette 2009/17)**

(54) **PROCEDE DE PREPARATION DE NANO PARTICULES D'OXYDES METALLIQUES COMPLEXES**

VERFAHREN ZUR HERSTELLUNG VON NANOPARTIKELN AUS KOMPLEXEN METALLOXIDEN

METHOD FOR PREPARING NANOPARTICLES OF COMPLEX METAL OXIDES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.07.2007 FR 0705515**

(43) Date de publication de la demande:
**05.05.2010 Bulletin 2010/18**

(73) Titulaire: **UNIVERSITE DE BOURGOGNE
21000 Dijon (FR)**

(72) Inventeurs:
• **STUERGA, Didier**
  **F-21000 Dijon (FR)**
• **LOHR, Christophe**
  **F-21000 Dijon (FR)**

(74) Mandataire: **Oudin, Stéphane
JurisPatent Dijon - Cabinet GUIU
10, Rue Paul Thénard
21000 Dijon (FR)**

(56) Documents cités:
**WO-A-02/060623       WO-A-03/070640
US-A- 4 543 341**

• VISWANATH R N ET AL: "Preparation and ferroelectric phase transition studies of nanocrystalline BaTiO3" NANOSTRUCTURED MATERIALS, ELSEVIER, NEW YORK, NY, US, vol. 8, no. 2, mars 1997 (1997-03), pages 155-162, XP004059045 ISSN: 0965-9773 cité dans la demande
• M. A. WILLERT-PORADA: "Microwave Processing of Metalorganics to Form Powders, Compacts, and Functional Gradient Materials" MRS BULLETIN, vol. 18, no. 11, novembre 1993 (1993-11), pages 51-57, XP009097623 Materials Research Society
• COMBEMALE L ET AL: "Microwave synthesis of yttria stabilized zirconia" MATERIALS RESEARCH BULLETIN, ELSEVIER, KIDLINGTON, GB, vol. 40, no. 3, 8 mars 2005 (2005-03-08), pages 529-536, XP004753213 ISSN: 0025-5408

**Description**

La présente invention concerne un procédé de préparation de nanoparticules d'oxydes métalliques complexes, en particulier de type spinelle ou pérovskite.

Une nanoparticule est un assemblage de quelques centaines à quelques milliers d'atomes, conduisant à un objet dont au moins l'une de ses dimensions est de taille nanométrique (1 à 100 nm).

Les nanoparticules se situent à la frontière entre la matière à l'échelle macroscopique et à l'échelle atomique ou moléculaire. Elles ont un intérêt à la fois fondamental et appliqué et sont très étudiées actuellement. De nombreux physiciens et chimistes les synthétisent, d'autres physiciens les étudient afin de comprendre la physique de ces objets nanométriques et des biologistes les utilisent comme marqueurs cellulaires.

Grâce à leurs propriétés spécifiques et originales, les nanomatériaux confèrent des fonctions innovantes à de nombreux produits traditionnels. Le marché des nanoparticules est ainsi en pleine expansion et connaît des applications dans de nombreux domaines comme l'énergie, l'environnement ou la santé.

Le développement industriel de ces matériaux implique la maîtrise des procédés de fabrication.

Il est ainsi connu, tel que décrit dans la demande WO 02/060623, de préparer des nanoparticules d'oxydes métalliques par chauffage d'un précurseur métallique dans un hydrocarbure, tel que des dérivés benzéniques, des hydrocarbures polyaromatiques, ou des paraffines, puis de séparer les particules obtenues de l'hydrocarbure. L'hydrocarbure agit en tant qu'agent dispersant, milieu réactionnel, et est destiné à faciliter la nucléation et la croissance des nanoparticules.

Ce procédé est toutefois long et implique des composés toxiques. Ces composés doivent être éliminés par lavage, ce qui diminue le rendement de la réaction. Il est en outre peu adapté à la préparation de nanoparticules d'oxydes métalliques complexes.

Le document VISWANATH R.N. et al : "Preparation and ferroelectric phase transition studies of nanocrystalline BaTiO3", Nanostructured Materials, Elsevier, New York, NY, US, vol. 8, no. 2, mars 1997 (1997-03), pages 155-162, ISSN:0965-9773, décrit un procédé de préparation de titanate de baryum nanocristallin. Ce procédé comprend le chauffage à 80°C pendant 10 à 12 heures d'éthanolate de baryum et d'éthanolate de titanium dans de l'éthanol, en l'absence d'eau. Le mélange est refroidi et une solution d'éthanol et d'eau (90 :10) est ajoutée pour former un précipité par hydrolyse. Ce précipité est ensuite soumis à un traitement thermique pour développer des cristaux de $BaTiO_3$. Ce procédé est toutefois très long et nécessite plusieurs étapes de traitement.

L'invention propose un procédé de préparation d'oxydes métalliques complexes qui remédie à ces inconvénients.

L'invention a ainsi pour objet un procédé de préparation de nanoparticules d'oxydes métalliques complexes. Le procédé comprend le chauffage d'éthanolates métalliques dans de l'éthanol, en l'absence d'eau, le chauffage de la solution étant homogène et comprenant une montée en température jusqu'à une température comprise entre 80 et 200°C, à une vitesse comprise entre 1 et 15°C/s. Le procédé selon l'invention permet de préparer des nanoparticules d'oxydes métalliques complexes avec substitution ou dopage, ainsi que des clusters d'oxydes métalliques, que l'on pourra mettre en oeuvre dans des procédés de fabrication de nanostructures et de nanomatériaux.

Il est particulièrement avantageux, puisqu'il n'implique qu'une seule étape. En particulier, le procédé selon l'invention ne nécessite pas d'étape de lavage, ce qui a pour conséquence que le rendement de la réaction est amélioré. Aucun produit parasite de type base, acide, ou complexant n'est à éliminer par lavage ou par échange de solvant. Le produit obtenu à l'issu du procédé est ainsi directement utilisable et formulable pour réaliser des dépôts ou des couches par les procédés habituels de trempage, de projection ou de coulage. Selon le rapport entre la matière sèche et le solvant on obtient des suspensions, des barbotines ou des pâtes.

Afin d'augmenter le nombre de sites de nucléation, et donc de favoriser la formation des nanoparticules, le chauffage comprend une montée en température jusqu'à une température comprise entre 80 et 200°C, à une vitesse comprise entre 1 et 15°C/s. La vitesse de montée en température peut ainsi être comprise entre 1 et 10°C/s ou encore entre 1 et 5°C/s.

La vitesse de montée en température est de préférence supérieure à 5°C/s et, encore de préférence comprise entre 5 et 10°C/s.

Le chauffage comprend une montée en température jusqu'à une température comprise entre 80 et 200°C, voire entre 100 et 200°C. La température est de préférence comprise entre 160 et 200°C.

On veillera à ce que la température dans la solution soit homogène, en particulier et de préférence à ce que la différence de température entre deux points quelconques de la solution soit inférieure ou égale à 1°C. On pourra ainsi obtenir une taille uniforme des particules, comprise entre 3 et 10 nm. De façon particulièrement préférée, la différence de température entre deux points quelconques de la solution est inférieure ou égale à 0,1°C.

De préférence, on pourra utiliser à la fois une des vitesses de montée en température décrites ci-dessous avec une des différences de température entre deux points quelconques de la solution décrites ci-dessus. Toutes les combinaisons possibles sont envisageables.

Le chauffage est de préférence de type micro-ondes.

L'utilisation de l'énergie électromagnétique, plus spécifiquement en bandes micro-ondes à la fréquence de 2,45 GHz permet de garantir un contrôle optimal de l'échauffement du milieu réactionnel.

L'énergie électromagnétique est en effet transférée directement au milieu réactionnel sans qu'il y ait transfert de chaleur par la paroi, comme c'est le cas dans les modes de chauffage conductifs conventionnels. La durée du régime transitoire d'instauration des ondes stationnaires dans le cas d'un chauffage micro-ondes est en effet très courte, de l'ordre de quelques centaines de picosecondes.

Il s'instaure dans le milieu réactionnel une distribution de sources thermiques dès les premières centaines de picosecondes d'application de l'énergie micro-ondes.

La vitesse de montée en température dans la solution dépend de la puissance micro-ondes appliquée. Les vitesses de montée en température selon l'invention permettent de favoriser la nucléation au détriment de la croissance des particules, et donc de favoriser une taille de particules homogène.

Pour favoriser encore davantage cette homogénéité de taille de particules, on mettra de préférence en oeuvre un champ électrique hétérogène, avec une distribution de champ électrique variant dans l'espace. Ce champ électrique hétérogène entraîne des mouvements convectifs du milieu réactionnel qui garantissent une homogénéité thermique et de composition.

On entend par champ électrique hétérogène un champ en mode électromagnétique résonnant qui présente des variations dans l'espace de l'amplitude du champ électrique, en particulier radialement dans le cas d'un réacteur cylindrique. L'amplitude varie de préférence radialement en suivant une fonction de Bessel.

De telles conditions thermiques opératoires sont envisageables avec d'autres modes de chauffage que le chauffage de type micro-ondes, du moment que ceux-ci garantissent les mêmes incréments spatiaux et temporels. Afin de s'affranchir des transferts pariétaux, il est préférable de chauffer directement le milieu réactionnel. De plus, le volume de l'enceinte de réaction sera de préférence petit et la source thermique aura de grandes dimensions.

Les nanoparticules d'oxydes métalliques complexes sont obtenues par chauffage d'éthanolates métalliques en solution dans l'éthanol. Les précurseurs utilisés sont ainsi les éthanolates des métaux dont on souhaite obtenir les oxydes. Comme les oxydes sont des oxydes complexes, qui sont substitués ou dopés, il suffit d'associer les différents précurseurs dans les proportions de la composition de la structure finale souhaitée.

Les précurseurs sont avantageusement des éthanolates métalliques de formule générale (1). Dans cette formule, M est un métal, notamment choisi parmi les alcalins, les alcalino-terreux, les métaux de transition et les terres rares, de charge positive p.

$$M(OCH_2CH_3)_p \qquad (1)$$

L'intérêt premier de ces espèces moléculaires est qu'elles possèdent déjà des liaisons métal-oxygène. Le second intérêt de ces précurseurs est qu'ils existent pour un grand nombre de métaux et de non-métaux. Ils sont soit liquides soit solides. Ils sont, pour la plupart, solubles dans des solvants usuels et plus spécifiquement dans l'éthanol. Les éthanolates de terres rares sont généralement insolubles dans l'éthanol tandis que les éthanolates de métaux de transition sont généralement solubles dans l'éthanol. On utilise de préférence des éthanolates solubles dans l'éthanol.

Avantageusement, on pourra recourir à certains additifs, que l'on décrira plus loin, afin d'améliorer et d'augmenter la solubilité des précurseurs dans l'éthanol.

Enfin, l'intérêt majeur de ces composés vis-à-vis du procédé est leur instabilité thermique. Il est donc possible de préparer des mélanges homogènes ou non de différents précurseurs pour associer plusieurs métaux dans une même structure cristallographique.

La réaction s'effectue en l'absence d'eau, ce qui permet d'éviter la création d'un réseau de liaisons M-O-M, ou encore la création d'hydroxydes ou d'oxydes, ce qui nuit à la dispersion en taille de particules et à l'uniformité des compositions.

Afin de réduire les risques de réaction des éthanolates métalliques avec d'éventuelles traces d'eau ou avec l'eau atmosphérique, on ajoutera avantageusement à la solution des additifs de stabilisation réduisant la réactivité naturelle des solutions d'éthanolates métalliques sans toutefois diminuer leurs caractéristiques d'instabilité thermique, essentielles au procédé.

De préférence, on mettra avantageusement en oeuvre des additifs aptes à la fois à augmenter la solubilité dans l'éthanol des précurseurs et à limiter leur réactivité vis-à-vis des traces d'eau, sans toutefois modifier leur instabilité thermiques. De tels additifs de stabilisation devront être des surfactants, des dispersants et des agents solubilisants.

A cette fin, on pourra utiliser les additifs suivants :

- polyols ou glycols, monomériques ou polymériques, comme par exemple : l'éthylène glycol, le glycérol ou le propylène glycol ; le diéthylène glycol, le triéthylène glycol ; polyéthylène glycol(PEG), polypropylène glycol(PPG), polytétraméthylène glycol (PTMG) et copolymères-blocs de ces derniers composés.

- éthers de glycol : dérivés de l'éthylène glycol (dits « éthers de type E ») de formule générale R-O-(CH$_2$-CH$_2$)n-OR',et les dérivés du propylène glycol (dits « éthers de type P ») de formule générale R-O-[CH$_2$-CH(CH$_2$)]n-O-R' (isomère alpha).

En particulier, des copolymères-blocs de PEG/PPG se sont avérés particulièrement adaptés dans le cadre du présent procédé, utilisés dans une proportion en mole comprise entre 0.1 et 10% par rapport au métal. Ces copolymères-blocs ont une formule générale (PEG)n(PPG)m(PEG)n. De tels copolymères sont disponibles dans le commerce, notamment auprès de BASF Corporation dans sa gamme Pluronic®, par exemple sous les références P123, F127, P3100, ou encore après de Croda International PLC sous les références Synperonic™ ou Brij56®.

Dans le cadre du procédé selon la présente invention, on utilise ainsi une solution éthanolique d'éthanolates métalliques. Le chauffage de la solution permet l'obtention directe en seule étape de particules d'oxydes simples ou complexes selon le schéma réactionnel suivant, pour un type d'éthanolate :

$$n[M(OCH_2CH_3)_p]^0 \rightarrow M_nO_{np/2} + (np/2)CH_3CH_2OCH_2CH_3 \qquad (2)$$

avec M un ion métallique de charge positive p et n un entier estimé à plusieurs centaines. Ce premier schéma réactionnel est de préférence mis en oeuvre en absence de traces d'eau. Si de l'eau est présente, elle induit un second schéma réactionnel parallèle (3) qui conduit plus moins rapidement vers des espèces comportant des hydroxydes et de l'eau dans des proportions variables dans la sphère de coordination. L'orientation vers ce second schéma est contrôlable par ajout volontaire d'eau.

$$n [M (OCH_2CH_3)_p]^0 + mH_2O \rightarrow M_n (OCH_2CH_3)_{np-m}(OH)_m + mCH_3CH_2OH \qquad (3)$$

Ces espèces conduisent également par chauffage à des oxydes selon le schéma réactionnel (4) :

$$[M_n(OCH_2CH_3)_{np-m}(OH)_m]^0 + (np/2)H_2O \rightarrow M_nO_{np/2} + (np-m)CH_3CH_2OH + mH_2O \qquad (4)$$

Les nanoparticules obtenues avec le schéma (4) sont toutefois de qualités moindres que celles du schéma (2) en termes de dispersion en taille et en uniformité de composition.

Le procédé selon l'invention est particulièrement bien adapté pour la préparation de polyoxométallates. Les polyoxométallates sont des complexes oligomériques d'ions métalliques et d'oxygène. Le métal peut notamment être choisi parmi V, Mo, W.

L'atout majeur de ce procédé est l'élaboration d'oxydes métalliques de composition complexe associant plusieurs éléments métalliques. On peut envisager des structures cristallographiques définies ou des structures complexes obtenues par substitution ou dopage des premières. L'originalité est que le rapport entre les éléments métalliques au niveau des nanoparticules produites sera identique à celui du mélange de départ. En conséquence, la composition des nanoparticules élaborées est directement contrôlée par la composition de la solution de départ.

En outre, les précurseurs moléculaires comme les éthanolates métalliques sont non ioniques et beaucoup plus solubles que les sels des terres rares comme les chlorures. L'absence d'ions chlorures permet de limiter les risques de corrosion des parties métalliques des installations. Les mélanges réactionnels sont faiblement ioniques et les pertes diélectriques sont limitées, facilitant ainsi le traitement micro-ondes.

L'éthanol est un solvant intéressant car il est facile à recycler et il confère des propriétés diélectriques vis-à-vis du chauffage micro-ondes, et notamment dans le domaine des hyperfréquences.

Les oxydes métalliques sont complexes, c'est-à-dire que ce sont des oxydes métalliques comprenant au moins deux métaux différents.

Les métaux peuvent être choisis parmi tous les métaux, et en particulier les métaux de transition, ainsi que les lanthanides.

Le procédé convient particulièrement pour la formation d'oxydes métalliques complexes de type à structure spinelle ou pérovskite.

A titre d'éthanolates métalliques, on peut citer les composés suivants :

| | | |
|---|---|---|
| Li(OEt) | Be(OEt)$_2$ | Al(OEt)$_3$ |
| Na(OEt) | Mg(OEt)$_2$ | Ga(OEt)$_3$ |
| K(OEt) | Ca(OEt)$_2$ | In(OEt)$_3$ |
| Rb(OEt) | Sr(OEt)$_2$ | Tl(OEt)$_3$ |
| Cs(OEt) | Ba(OEt)$_2$ | |

(suite)

| | | |
|---|---|---|
| $Ge(OEt)_4$ | $Sb(OEt)_3$ | $Hf(OEt)_4$ |
| $Sn(OEt)_4$ | $Bi(OEt)_3$ | $Ta(OEt)_5$ |
| $Pb(OEt)_2$ | | $W(OEt)_6$ |
| | | $Re(OEt)_4$ |
| | | $Os(OEt)_3$ |
| | | $Ir(OEt)_3$ |
| | | $Pt(OEt)_2$ |
| | | $Au(OEt)_3$ |
| | | $Hg(OEt)_2$ |

| | | |
|---|---|---|
| $Sc(OEt)_3$ | $Y(OEt)_3$ | $La(OEt)_3$ |
| $Ti(OEt)_4$ | $Zr(OEt)_4$ | $Ce(OEt)_3$ |
| $Cr(OEt)_3$ | $V(OEt)_5$ | $Ce(OEt)_4$ |
| $Mn(OEt)_2$ | $Nb(OEt)_3$ | $Nd(OEt)_3$ |
| $Mn(OEt)_3$ | $Mo(OEt)_6$ | $Sm(OEt)_2$ |
| $Fe(OEt)_2$ | $Tc(OEt)_4$ | $Sm(OEt)_3$ |
| $Fe(OEt)_3$ | $Ru(OEt)_3$ | $Eu(OEt)_2$ |
| $Co(OEt)_2$ | $Rh(OEt)_3$ | $Eu(OEt)_3$ |
| $Co(OEt)_3$ | $Pd(OEt)_2$ | $Gd(OEt)_3$ |
| $Ni(OEt)_2$ | $Pd(OEt)_3$ | $Tb(OEt)_3$ |
| $Cu(OEt)_2$ | $Ag(OEt)$ | $Dy(OEt)_3$ |
| $Zn(OEt)_2$ | $Cd(OEt)_2$ | $Ho(OEt)_3$ |
| | | $Er(OEt)_3$ |
| | | $Tm(OEt)_3$ |
| | | $Yb(OEt)_3$ |
| | | $Lu(OEt)_3$ |
| | | $Ac(OEt)_3$ |
| | | $Th(OEt)_4$ |

A titre d'oxydes métalliques complexes, on peut citer les composés de formules suivantes :

- $Fe_3M_xO_4$ avec M=Co, Ni, Mn, Zn, MnZn, (structure de type spinelle),
- $BaTiO_3$, (structure de type pérovskite),
- $LaCoO_3$, $LaMnO_3$, $LaFeO_3$,
- $La_{1-x}Sr_xMO_3$ avec M=Co,Mn,Cr,Fe,
- $(ZrO_2)_{1-x}M_2O_3$ avec M=Y,Yb,Gd,Nd,Ce,Sb,In,Eu,Ho,Pr,Bi
- $(ZrO_2)_{1-x}(MO)$ avec M=Ca,Sr

Le procédé selon l'invention permet également d'obtenir des clusters d'oxydes métalliques : en solution dans l'éthanol, le coeur des particules est constitué d'oxyde (environnement octaédrique M06 ou tétraédrique MO4 selon le métal) et la périphérie du cluster ou de la particule est recouverte de reste éthyle ($OCH_2CH_3$).

Ainsi par exemple, dans le cas de l'oxyde de titane $TiO_2$ en mileu éthanol, le cluster élémentaire est le suivant : $Ti_{16}O_{16}(OCH_2CH_3)_{32}$.

Une telle structure de cluster obtenue par le procédé selon l'invention a été caractérisée par les inventeurs selon les techniques de RMN décrites dans la publication de LE CALVE S. et al., C. R. Chimie 7 (2004), p. 241-248.

On notera l'immense avantage que procure le procédé selon l'invention en terme de temps de synthèse : en effet, les techniques classiquement employées, décrites dans la publication susmentionnée ou encore par exemple dans le document SCOLAN et al, J. Mater. Chem, 1999, 9, 2467-2474, nécessitent plusieurs jours de synthèse, alors que le procédé selon l'invention permet d'obtenir ces clusters oxo-métalliques en quelques minutes au plus et dans des conditions environnementales bien moins contraignantes.

D'autres buts, caractéristiques et avantages de l'invention ressortiront à la lecture de l'exemple qui suit et qui se réfère aux figures annexées, qui illustrent un dispositif permettant de mettre en oeuvre le procédé selon l'invention.

**Exemple : préparation de nanoparticules d'oxyde de zirconium dopé à l'yttrium**

Dispositif employé

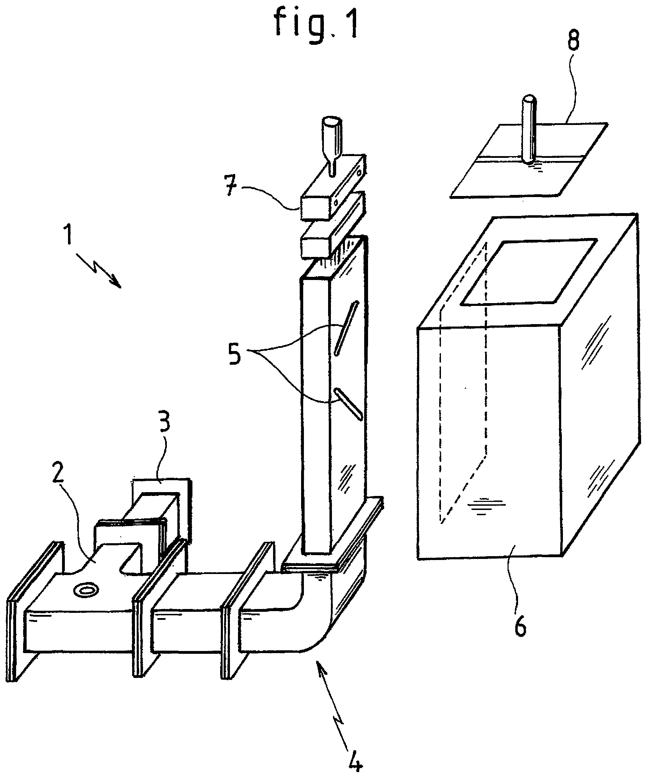

On utilise un dispositif de type micro-ondes. Tel qu'illustré à la figure 1, le dispositif 1 comprend un circulateur 2 relié à un générateur micro-ondes, non représenté. Le générateur micro-ondes est destiné à produire l'énergie micro-ondes à partir d'un réseau électrique à l'aide d'un magnétron. L'ordre de grandeur des puissances utilisées est le kilowatt. Le circulateur 2 est destiné à limiter le niveau d'ondes réfléchies. La puissance micro-ondes réfléchie est déviée sur une charge à eau 3.

Le circulateur 2 est relié à une série d'éléments de guides d'ondes 4 standards. Les dimensions de la section (86mm*43mm) de ces éléments de guides d'ondes sont telles qu'elles permettent uniquement la propagation de l'énergie électromagnétique sous forme du mode transverse électrique TE01. La codification TE (transverse électrique) signifie qu'il n'y a pas de composante longitudinale pour le champ électrique. La codification 01 signifie que le champ électrique ne varie pas selon le petit côté de la section du guide d'ondes et a une variation sinusoïdale selon la grande dimension. La fréquence utilisée est 2,45 GHz.

Le transfert énergétique du guide d'ondes vers une cavité 6 munie d'un couvercle 8 est assuré par des fentes rayonnantes 5. L'ampleur du couplage avec la cavité 6 dépend de la proximité de la fréquence de résonance avec la fréquence de travail (fréquence du générateur). Pour assurer un couplage optimum, on ajuste la position d'un piston 7 qui est situé à l'autre extrémité du guide d'ondes. Quand la puissance réfléchie est minimale, on peut considérer que la cavité 6 est accordée, c'est-à-dire qu'un maximum d'énergie est transféré du générateur vers l'applicateur.

On dispose dans la cavité 6 un autoclave contenant les réactifs.

Le dispositif 1 permet des niveaux de couplage proches de 98% (2% de micro-ondes réfléchies). La cavité 7 est résonnante et est surdimensionnée. Elle est constituée d'un volume métallique de forme parallélépipédique (section carrée de coté 245 mm et hauteur de 405 mm). Son caractère résonnant permet d'assurer un transfert optimal de l'énergie micro-ondes au milieu réactionnel.

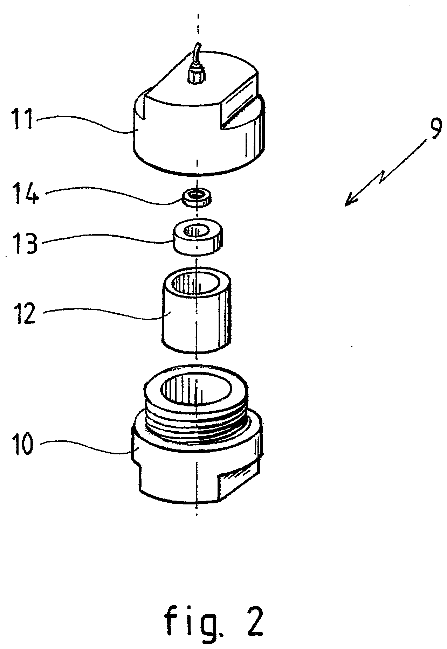

Tel qu'illustré à la figure 2, l'autoclave 9 comprend un corps inférieur 10 et un corps supérieur 11 destiné à être vissé dans le corps inférieur 10. Le corps inférieur 10 et le corps supérieur 11 sont en poly(éther imide) (PEI), notamment celui commercialisé sous la dénomination ULTEM® par la société General Electric. On emploie du PEI en raison de sa transparence aux micro-ondes, ce qui permet de garantir un transfert optimal de l'énergie électromagnétique vers le milieu réactionnel.

Le diamètre extérieur du corps inférieur 10 et du corps supérieur 11 est de 80 mm, tandis que le diamètre intérieur du corps inférieur 10 et du corps supérieur 11 est de 40 mm. La hauteur du corps inférieur 10 est de 90 mm, tandis que la hauteur du corps supérieur 11 est de 80 mm.

On dispose dans le corps ainsi formé une enceinte 12 en polytétrafluoroéthylène (commercialisé sous la dénomination Téflon® par la société DuPont). Ce matériau est transparent aux micro-ondes et inerte chimiquement. L'enceinte 12 est destiné à accueillir le mélange réactionnel et présente un volume utile de 20 cm$^3$. Elle présente un diamètre extérieur de 40 mm et diamètre intérieur de 25 mm et a une hauteur de 70 mm. Elle est recouverte d'un anneau 13 en polytétrafluoroéthylène et d'un bouchon 14 en PEI. L'anneau 13 a un diamètre extérieur de 32 mm, un diamètre intérieur de 28 mm et présente une hauteur de 15 mm. Le bouchon 14 a un diamètre extérieur de 28 mm, un diamètre intérieur de 2 mm et une hauteur de 80 mm. La hauteur totale de l'autoclave 9 une fois monté est de 145 mm.

Le dispositif est en outre avantageusement muni d'un capteur de pression et d'un thermomètre fluorooptique non interférent, non représentés, permettant de suivre l'évolution de la pression et de la température.

Les dimensions des différents éléments de l'autoclave 9 mentionnées ci-dessus permettent d'obtenir un mode électromagnétique résonnant, du type fonction de Bessel, et qui assurent une homogénéité thermique et de composition.

L'homme du métier pourra choisir un réacteur d'autres dimensions, par exemple en réglant le piston 7 pour obtenir une puissance réfléchie minimale et obtenir ainsi un mode électromagnétique résonnant au sein du réacteur.

Mode opératoire

On prépare de l'oxyde de zirconium (IV) dopé par de l'yttrium (III). La formule globale non stoechiométrique est :

$$Zr_{1-x}Y_xO_{2-x/2} \equiv (1-x)ZrO_2 + (x/2)Y_2O_3$$

x étant le taux de dopage à l'yttrium. Cette structure peut être écrite sous forme globale ou sous forme de mélange entre de l'oxyde de zirconium (IV) et de l'oxyde d'yttrium (III).

Le mélange réactionnel associe les deux précurseurs à base de zirconium et d'yttrium dans les proportions de la composition finale souhaitée. Dans la suite, on utilise un taux de dopage en Yttrium de x=0,08. L'éthanolate de zirconium est parfaitement soluble dans l'éthanol alors que l'éthanolate d'yttrium est insoluble. Le mélange réactionnel est donc constitué d'une solution d'éthanol avec une suspension de matière solide.

Le tableau ci-dessous récapitule les masses molaires, les quantités molaires et massiques des deux précurseurs et du composé final en considérant un volume de mélange réactionnel de 20 cm$^3$.

Tableau 1

| | Masse Molaire (g.mol$^{-1}$) | Nb. mole (millimoles) | Masse (g) | Concentration (mol.L$^{-1}$) |
|---|---|---|---|---|
| $Zr(OCH_2CH_3)_4$ | 271,2 | 10 | 2,71 | 0,5[2] |
| $Y(OCH_2CH_3)_3$ | 223,9 | 0,86 | 0,19 | 0,043[3] |
| $Zr_{0,92}Y_{0,08}O_{1,96}$ | 122,4[1] | 0,92 | - | - |
| [1]Masse molaire équivalente de la structure finale. [2]Concentration pour un volume de 20 cm$^3$ d'éthanol. [3]Concentration équivalente, le précurseur étant insoluble. | | | | |

Le chauffage du milieu provoque la création de ponts oxo entre les centres métalliques générant ainsi la nucléation et la croissance de nanoparticules d'oxyde dans le milieu réactionnel. Le schéma réactionnel global est décrit par la réaction suivante:

$$(1-x)\ [Zr(OCH_2CH_3)_4]^0 + x[Y(OCH_2CH_3)_3]^0 \rightarrow Zr_{1-x}Y_xO_{2-x/2} + ((4-x)/2)CH_3CH_2OCH_2CH_3$$

La température de consigne est de 200°C, sous une pression de 20 bars (2.10$^6$ Pa).

Le tableau ci-dessous indique différentes conditions opératoires avec pour une puissance micro-ondes appliquée, la vitesse de chauffage, l'incrément de température, les temps de rampe et de palier.

Tableau 2

| Puis. Micro-ondes[1] (kW) | Vit. de Chauffage (°C.s$^{-1}$) | Incrément[2] (°C) | Temps rampe[3] (s) | Temps palier[4] (s) |
|---|---|---|---|---|
| 0,5 | 1,5 | 140 | 93 | 87 |
| 1 | 3 | 140 | 46 | 134 |
| 2 | 6 | 160 | 26 | 154 |
| [1] Puissance micro-ondes appliquée. La puissance restituée est obtenue avec un coefficient de réflexion de 98%. Ce coefficient de réflexion est mesuré grâce à une antenne positionnée au niveau de la charge à eau 3 et un milieu réactionnel à la température initiale de 20°C. [2] L'incrément de température est la différence entre la température initiale du milieu réactionnel et la température de palier ou température de consigne souhaitée. [3] Les temps de rampe correspondent au temps d'application de la puissance micro-ondes jusqu'à obtention de la température de consigne. [4] Les temps palier correspondent aux période où la puissance micro-ondes est considérablement réduite afin de conserver une température égale à la température de consigne. | | | | |

Produits obtenus

On obtient une suspension de matière solide blanchâtre. L'isolation sous forme pulvérulente du solide conduit à une poudre blanchâtre avec des nuances jaunes. Cette poudre est plus ou moins dispersable selon le procédé d'isolement (évaporation simple ou lyophilisation).

L'analyse centésimale faite par analyse EDX (Energy Dispersive X-ray en langue anglaise) permet de vérifier aisément le ratio zirconium/yttrium qui est très proche de la valeur théorique (1,6 pour 1,66). Un spectre infrarouge dans le domaine 100-1000 cm$^{-1}$ révèle les bandes caractéristiques des oxydes de zirconium de structures quadratique (groupe d'espace P4$_2$/nmc; 575-580 cm$^{-1}$; 515-510 cm$^{-1}$; 425-435 cm$^{-1}$; 360-365 cm$^{-1}$) et cubique (groupe d'espace Fm3m, 490-440 cm$^{-1}$). L'analyse morphologique par microscopie électronique à transmission révèle des entités sphéroïdales d'une taille moyenne comprise entre environ 6 et 10 nm. Un traitement thermique de cette poudre (600°C pendant 2 heures sous air) permet un grossissement des grains d'oxydes suffisant pour garantir une analyse par diffraction des rayons X qui confirme la présence des phases révélées par l'analyse infrarouge. Les entités nanométriques élaborées sont donc intermédiaires entre des espèces moléculaires et des particules de solides de tailles suffisantes pour diffracter. Ces caractéristiques spécifiques permettent de caractériser l'existence d'espèces de type polyoxométallates (POM) des mêmes types que celles connues essentiellement dans la chimie du molybdène, du vanadium et du tungstène.

**Revendications**

1.  - Procédé de préparation de nanoparticules d'oxydes métalliques complexes, **caractérisé en ce qu'**il comprend le chauffage d'éthanolates métalliques dans de l'éthanol, en l'absence d'eau, le chauffage de la solution étant homogène et comprenant une montée en température jusqu'à une température comprise entre 80 et 200°C, à une vitesse comprise entre 1 et 15°C/s.

2.  - Procédé selon la revendication 1, **caractérisé en ce que** le chauffage est de type micro-ondes.

3.  - Procédé selon la revendication 1 ou 2, **caractérisé en ce que** la vitesse de montée en température est comprise entre 5 et 10°C/s.

4.  - Procédé selon l'une des revendications 1 à 3, **caractérisé en ce que** le chauffage comprend une montée en température jusqu'à une température comprise entre 100 et 200°C.

5.  - Procédé selon l'une des revendications 1 à 4, **caractérisé en ce que** la différence de température entre deux points quelconques de la solution est inférieure ou égale à 1°C.

6.  - Procédé selon la revendication 5, **caractérisé** en que ce la différence de température est inférieure ou égale à 0,1°C.

7.  - Procédé selon l'une des revendications 1 à 6, **caractérisé en ce que** les oxydes métalliques complexes sont de type à structure spinelle ou pérovskite.

8.  - Procédé selon l'une des revendications 1 à 7 **caractérisé en ce que** les oxydes métalliques complexes sont des polyoxométallates.

**Patentansprüche**

1.  Verfahren zur Herstellung von Nanopartikeln aus komplexen Metalloxiden, **dadurch gekennzeichnet, dass** es das Erhitzen von metallischen Ethanolaten in Ethanol unter der Abwesenheit von Wasser umfasst, wobei das Erhitzen der Lösung homogen ist und einen Temperaturanstieg bis auf eine Temperatur im Bereich zwischen 80 und 200 °C bei einer Geschwindigkeit im Bereich zwischen 1 und 15 °C/s umfasst.

2.  Verfahren nach Anspruch 1, **dadurch gekennzeichnet, dass** das Erhitzen vom Mikrowellentyp ist.

3.  Verfahren nach Anspruch 1 oder 2, **dadurch gekennzeichnet, dass** die Temperaturanstiegsgeschwindigkeit im Bereich zwischen 5 und 10 °C/s beträgt.

4.  Verfahren nach einem der Ansprüche 1 bis 3, **dadurch gekennzeichnet, dass** das Erhitzen einen Temperaturanstieg bis auf eine Temperatur im Bereich zwischen 100 und 200 °C umfasst.

5.  Verfahren nach einem der Ansprüche 1 bis 4, **dadurch gekennzeichnet, dass** der Temperaturunterschied zwischen zwei beliebigen Punkten der Lösung kleiner oder gleich 1 °C ist.

6.  Verfahren nach Anspruch 5, **dadurch gekennzeichnet, dass** der Temperaturunterschied kleiner oder gleich 0,1 °C ist.

7.  Verfahren nach einem der Ansprüche 1 bis 6, **dadurch gekennzeichnet, dass** die komplexen Metalloxide vom Typ mit Spinell- oder Perowskit-Struktur sind.

8.  Verfahren nach einem der Ansprüche 1 bis 7, **dadurch gekennzeichnet, dass** die komplexen Metalloxide Polyoxometallate sind.

**Claims**

1. Method for preparing nanoparticles of complex metal oxides, **characterised in that** it comprises the heating of metal ethanolates in ethanol, in the absence of water, with the heating of the solution being performed uniformly and comprising a raising in the temperature up to a temperature between 80 and 200°C, at a rate between 1 and 15°C/s.

2. Method according to claim 1, **characterised in that** the heating is of the microwave type.

3. Method according to claim 1 or 2, **characterised in that** the rate of raising in temperature is between 5 and 10°C/s.

4. Method according to one of claims 1 to 3, **characterised in that** the heating comprises a raising in temperature up to a temperature between 100 and 200°C.

5. Method according to one of claims 1 to 4, **characterised in that** the difference in temperature between any two points of the solution is less than or equal to 1°C.

6. Method according to claim 5, **characterised in that** the difference in temperature is less than or equal to 0.1°C.

7. Method according to one of claims 1 to 6, **characterised in that** the complex metal oxides are of the spinel or perovskite type.

8. Method according to one of claims 1 to 7 **characterised in that** the complex metal oxides are polyoxometalates.

fig.1

11

14

13

12

10

9

fig. 2

# EP 2 181 067 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 02060623 A

### Littérature non-brevet citée dans la description

- Preparation and ferroelectric phase transition studies of nanocrystalline BaTiO. **VISWANATH R.N. et al.** Nanostructured Materials. Elsevier, Mars 1997, vol. 8, 155-162

- **LE CALVE S. et al.** *C. R. Chimie,* 2004, vol. 7, 241-248
- **SCOLAN et al.** *J. Mater. Chem,* 1999, vol. 9, 2467-2474